# EUROPEAN PATENT SPECIFICATION

(11) **EP 0 272 461 B1**
(45) Date of publication and mention of the grant of the patent: **11.08.1993**
(21) Application number: 87117178.1
(22) Date of filing: 20.11.1987
(51) Int. Cl.: F16H 47/04

(54) **Nonstep speed change gear**
Stufenloses Getriebe
Transmission continue de vitesse

(30) Priority: 21.11.1986 JP 279386/86; 31.03.1987 JP 78847/87
(43) Date of publication of application: 29.06.1988
(73) Proprietor: SHIMADZU CORPORATION, Nakagyo-ku Kyoto-shi Kyoto 604 (JP)
(72) Inventor: Kita, Yasuo, Yamashina-ku Kyoto 607 (JP)
(74) Representative: Grams, Klaus Dieter, Dipl.-Ing.

(56) References cited:
- EP-A- 195 452
- EP-A- 0 234 135
- EP-A- 0 234 136
- EP-A- 0 235 466
- FR-A- 2 274 837

## Description

The present invention relates to a non step speed change gear according to the preamble of claim 1. A non-step speed change gear comprising the features of the preamble of claim 1 is known from FR-A-2 274 837. This known gear comprises a non-step speed change mechanism in the form of a hydraulic transmission (HST) comprising a hydraulic pump and motor or in the form of a traction drive mechanism. These mechanisms are excellent in their non step speed change characteristics, but their efficiency is not always high and the speed range is not satisfactorily wide. Therefore, the known non step speed change gear is designed to have power transmission shared by HST and a differential gear mechanism jointly used, thereby enabling the aforementioned HST's non step speed changeability and the high efficiency of the differential gear mechanism comprised of dry or wet type multiple disc clutches which are switchable by oil pressure, etc.

A multiple disc clutch having a large number of discs tends to be bulky. Accordingly, incorporating such clutches into the mode switching section will raise a problem of making difficult miniaturization and weight reduction of the equipment as a whole. In clutches of this type, which is designed to make smooth switching of power transmission state, taking advantage of the slip between each clutch disc with a large area, the energy loss at the switching time is enormous. Such clutch discs are susceptible to abrasion, giving rise to the inconvenience that time and labor is taken for its maintenance.

Further, in order to get rid of the shock at the mode switching time with such a device, transmission torque (control oil pressure) of both high and low clutches needs to be delicately controlled mutually and in time dependent manner, for which a trial and error adjustment is required. And heating and abrasion due to half clutch at the switching time and adjustment shift resulsting from oil wetting (viscosity) change and such other problems will be raised. In such a device, there also exists a problem that it is difficult to predict an optimal conditions for all running conditions involving wide changes of torque and speed.

The present invention has as its object solving such a problem as above-described and has adopted the following composition.

Thus, the non-step speed change gear according to the present invention comprises
a) a differential gear mechanism having a first, second and third input/output end and forming a low speed side mechanical transmission system (a) which passes between first and second input/output ends and a high speed side mechanical transmission system (b) which passes between first and third input/output ends,
b) a non-step speed change mechanism which while connecting one of its input/output ends to the second input/output end of said differential gear mechanism, connects its other input/output end to said third input/output end,
c) a low speed side intermittent power on-off making mechanism for contacting or removing the transmission end of said low speed side mechanical transmission system (a) on or from a common rotary element provided on the input/output side of the speed change gear,
d) a high speed side intermittent power on-off making mechanism for contacting or removing the transmission end of the high speed side mechanical transmission system (b) on or from said common rotary element,
e) and a switching mechanism for switching between the states of engagement and disengagement of each of said intermittent power on-off making mechanisms, respecitvely,
   characterized in that
f) said low speed side intermittent power on-off making mechanism and said high speed side intermittent power on-off making mechanism are both of a synchromesh type comprising an engageable and disengageable low speed sleeve and high speed sleeve, respectively,
g) said engagement and disengagement of said sleeves are based on the continuous control of said non-step speed change mechanism,
h) the engagement mode being such that said respective sleeve is continuously pressed in its engaging direction by said switching mechanism until it is brought in a full engagement position, while controlling said non-step speed change mechanism to decrease the rotary speed difference between said respective transmission end and said common rotary element,
i) the disengagement mode being such that said respective sleeve is pressed by a suitably weak force in the disengaging direction by said switching mechanism until it is brought into a full disengagement position, while said non-step speed change mechanism is controlled so as to decrease the transmission troque of the respective intermittent power on-off making mechanism,
j) and that the engagement of one of said two sleeves is effected before the disengagement of the other of said two sleeves is effected.

Synchromesh type devices in connection with a speed change gear comprising a non-step speed change mechanism are known from EP-A-0 195 452. However, the inventive control of the engagement and disengagement of the sleeves of the synchromesh type intermittent power on-off making mechanism as defined by the above features h, i and j are not known from this document.

As the aforementioned synchromesh type intermittent power on-off making mechanism, for example, the inertia lock type for use in rolling stock transmission or constant load type is applicable.

With such a composition, in low speed mode, the transmission terminal of the low speed side mechanical transmission system which passes between the first and the second in- and out-put ends of the differential mechanism is joined to a common rotary element installed on the in- or out-put side through to low speed side synchromesh type intermittent power on-off making mechanism, and part of the inputted power is directly outputted through the low speed side mechanical transmission system. And the balance power is led to the output side through a hydraulic transmission system formed by the hydraulic transmission mechanism; in this instance, while the hydraulic pump/motor on one side works as a motor, hydraulic pump/motor on the other exhibits the function as a pump.

In the high speed mode, the transmission end of the high speed side mechanical transmission system which passes between the first and the third input ends of the differential mechanism is joined to the aforementioned common rotary element though the high speed side synchromesh type intermittent power on-off making mechanism, whereby part of the inputted power is directly outputted through this high speed side mechanical transmission system. And the balance powrer is led to the output side through a hydraulic transmission system formed by the hydraulic transmission mechanism; in this instance, however, the roles of the aforementioned respective hydraulic pumps/motors as a pump or a motor are interchanged from the previous case.

The switching from the aforementioned low speed mode to the aforementioned high speed mode is made in the following manner: Thus in the state of the low speed side synchromesh type intermittent power on-off making mechanism only being connected, an operation is applied to the effect that connection is to be made to the high speed side synchromesh type intermittent power on-off making mechanism, when the rotational speed of the transmission end of the high speed side mechanical transmission system has approached the rotary speed of the transmission end of the low speed side mechanical power transmission system. Then as the rotational speeds of the aforementioned two transmission ends have become equal, the high speed side synchromesh type intermittent power on-off making mechanism is automatically brought into its connected state, so that the transmission end of the high speed side mechanical power transmission system is coupled to the common rotary element. Thereafter, the low speed side type intermittent power on-off making mechanism is switched into its unconnected state; then, the device is in its high speed mode. When switching from the high speed mode to the low speed mode, it is only proper to run the operation conversely.

The switching operation between the low and the high speed sides may be performed, for example, in the following manner:
Thus first, the sleeve of the high speed side intermittent power on-off mechanism continues being pressed with an appropriate force in its engaging direction by a switching mechanism, to be in its stand-by posture. Then the aforementioned sleeve will move in its engaging direction the movement when the rotational speeds of the aforementioned two transmission terminals are equalized by the action of the synchronizer ring speed of the power on-off making mechanism, then, the high speed side synchromesh type intermittent power on-off making mechanism is automatically brought into its connected state and the transmission end of the high speed side mechanical power transmission system is coupled to the common rotary element. Thereafter, in order to switch either of the synchromesh type intermittent power on-off making mechanism to its unconnected state, the sleeve of the power transmission mechanism to be disengaged continues being pressed in its disengaging direction with an appropriate force, to be in its stand-by posture; and then, the speed change ratio of the aforementioned nonstep speed change mechanism is corrected in the direction of decreasing the transmission torque of the intermittent power on-off making mechanism. Then the moment when the transmission torque of said intermittent power on-off making mechanism becomes nearly zero, the sleeve will move in its disengaging direction, thereby interrupting the transmission of torque.

Because of the composition of this invention being as hereabove-described, following effects will be derived:
First because bulky multiple disc, etc., are unnecessary, size and weight reduction is feasible and moreover, maintenance is facilitated.

Besides, half-clutch type control is unnecessary, so that smooth, unforcible mode switching may be made without using high accuracy control system. Accordingly, adjustment based on trial and error approach will not be required and moreover, adjustment shift caused by change in oil moisture, etc., will not be invited.

Further, if a synchromesh type intermittent power on-off making is used in combination with a switching mechanism matched in characteristics to the former mechanism, switching of mode may be ensured without making use of high precision rotational speed detector, etc., and ideal shock free switching operation may be always run, even under traveling conditions involving large change in torque or speed.

### BRIEF DESCRIPTION OF THE DRAWINGS

FIG. 1 is an systematic diagram;
FIG. 2 is a sectional view showing a synchromesh type intermittent power on-off making mechanism and switching mechanism section;
FIG. 3 is a partial sectional view showing in an enlarged view synchronizer key arranged section of the synchromesh type intermittent power on-off making mechanism;
FIGS. 4-6 are views for expansion of actions, and
FIG. 7 is an explanatory graph showing control patterns.

### DETAILED DESCRIPTION OF THE INVENTION

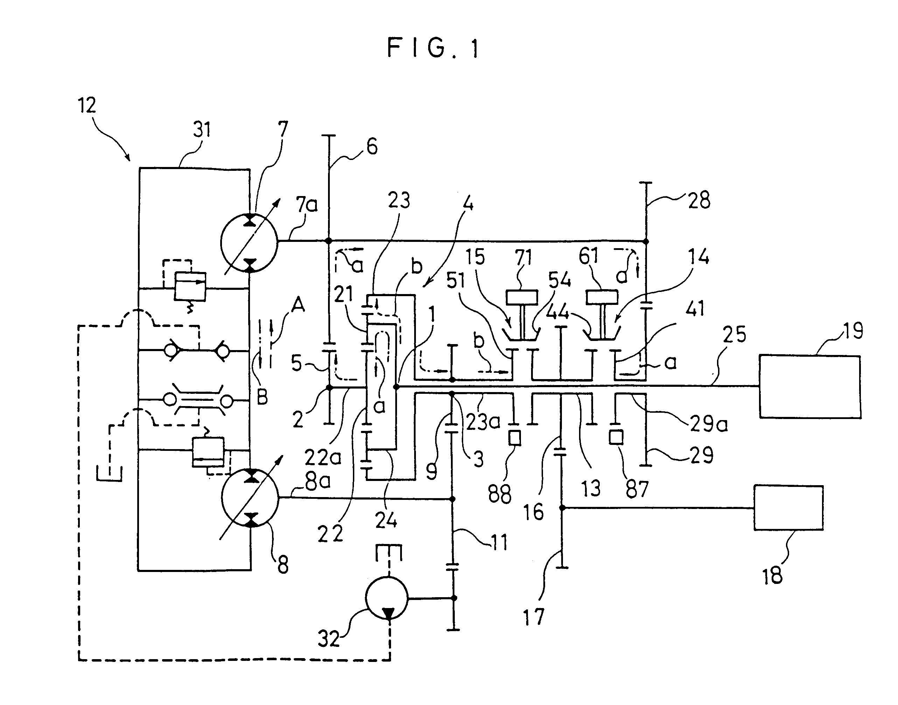

In the following an embodiment of this invention will be described in reference to the accompanying drawings:
The nonstep speed change gear of this invention is equipped with a differential gear mechanism 4 having, as schematically shown in FIG. 1, a first, second and third in- and out-put ends 1, 2 and 3 and forming a low speed side mechanical transmission system a which passes between the first and the second in- and out-put ends 1 and 2 and a high speed side mechanical transmission system b which passes between the first and the third in- and out-put end 1 and 3, a nonstep speed change mechanism 12 which while having an in- and out-put shaft 7a (one of the in- and out-put ends) of one of hydraulic pumps/motors 7 joined to the second in- and out-put end 2 of this differential gear mechanism 4 through gears 5 and 6, has an in- and out-put shaft 8a (the other in- and out-put end) of the other hydraulic pump/motor 8 joined to the aforementioned third in- and out-put end 3 through gears 9 and 11, forming a variable speed hydraulic transmission system A and B by these two pumps/motors 7 and 8, and a low speed side synchromesh type intermittent power on-off making mechanism 14 for contacting or removing a transmission end of the aforementioned low speed side mechanical transmission system a on or from a center boss 13 being a commom rotary element and a high speed side synchromesh type intermittent power on-off making mechanism 15 for contacting or removing a transmission end of the aforementioned high speed side mechanical transmission system b on or from the aforementioned center boss 13. And the center boss 13 is connected to an output shaft 18 through gears 16 and 17.

The differential gear mechanism is a planetary gear system having a sun gear 22 disposed inside a plurality of planetary gears 21 which are equally distributed along the circumferential direction and a ring gear 23 meshed with their outside. And the center of a gear retainer 24 which bears the shaft of each planetary gear 21 above-mentioned is used as the aforementioned first in- and out-put end 1 and to this in- and out-put end, the in- and out-put shaft 25 coupled to the power source 19 is joined. Then a distal end of the supporting shaft 22a of the aforementioned sun gear 22 is used as the aforementioned second in- and out-put end and to this in- and out-put end 2, the aforementioned gear 5 is fixed. Further, a distal end of the boss part 23a of the aforementioned ring gear 23 is used as the aforementioned third in- and out-put end 9 and on this in- and out-put end 3, the aforementioned gear 9 is provided. Thus the aforementioned low speed side mechanical transmission system a is composed of the aforementioned planetary gear 21, sun gear 22, gear 5, gear 6, gear 28 and gear 29, with the boss part 29a of the gear 29 playing the part of the transmission end of said mechanical transmission system a. On the other hand, the aforementioned high speed side mechanical transmission system b is composed of the aforementioned planetary gear 21 and ring gear 23, with the boss part 23a of the aforementioned ring gear 23 playing the role as a transmission end of said mechanical transmission system b.

The aforementioned nonstep speed change mechanism 12 is composed of a variable capacity type hydraulic pump/motor 7 and another variable capacity type hydraulic pump/motor 8, connected in series through a hydraulic circuit 31 similar as the one of the conventional HST; in which while the in- and out-put shaft 7a of the aforementioned hydraulic pump/motor 7 is connected to the supporting shaft 22a of the aforementioned sun gear 22 through gears 6 and 5, the in- and out-put shaft 8a of the aforementioned hydraulic pump/motor 8 is connected to the aforementioned ring gear 23 through gears 11 and 9. Numeral, 32 denotes a boost pump connected to the aforementioned hydraulic circuit 31.

Further, the low speed side synchromesh type intermittent powrer on-off making mechanism 14 is of the so-called inertia locking type having dog gear 41 and synchronizer ring 42 arranged between one end of the aforementioned center boss 13 and the boss part 29a of the gear 29 used as the transmission end of the aforementioned low speed side mechanical transmission system a. The dog gear 41 is fixed on the boss part 29a of the aforementioned gear 29 and has on its outer perimeter teeth 41a with its tip portion 41b turned toward the aforementioned center boss 13. On the outer periphery of the boss portion of the dog gear 41, there is formed a cone clutch surface 41c having diameters gradually diminishing toward the center boss 13 and on this cone clutch surface 41c, the aforementioned synchronizer ring 42 is slidably engaged. The synchronizer ring 42 has on its outer periphery teeth 42a with their tip portion 42b turned toward the center boss 13 and has cavitites 42c formed in a plurality of places on the outer periphery of the center boss 13, there is formed a spline 43 having identical effective diameter and pitch to those of the teeth 41a of the aforementioned dog gear and the teeth 42a of the synchronizer ring 42, and to this spline 43, another spline 45 curved in the inner periphery of sleeve 44 is meshed slidably in the axial center direction. At the location corresponding to the aforementioned cavity 42c of this center boss 13, there are provided notched grooves 46 opened at the end surface, and to each notched groove 46, the synchronizer key 47 is respectively engaged. The width of the synchronizer key 47 is set to a value nearly eqaual to the opening width in the circumferential direction of the aforementioned notched groove 46. Accordingly, these synchronizer key 47 are slidable only in the axial center direction and radial direction of the center boss 13. Each synchronizer key 47 is urged outword by a spring 48, for its distal end to be inserted in the cavity 42c of the aforementioned synchronizer ring 42. On the outer surface of each synchronizer key 47, there is provided a protrusion 47a; this protrusion 47a is elastically engaged in a shallow recess 45a provided on the inner perimeter of the spline 45 of the aforementioned sleeve 44. In the outer periphery of the aforementioned sleeve 44, an annular groove 44a is formed and in this annular groove 44a, a shifter 62 of the later described switching mechanism 61 is engaged.

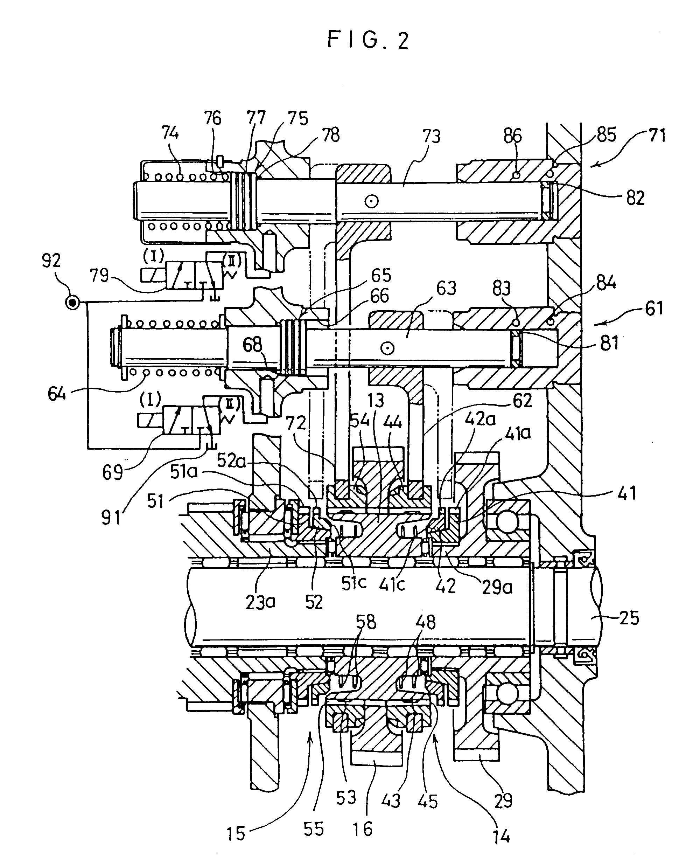

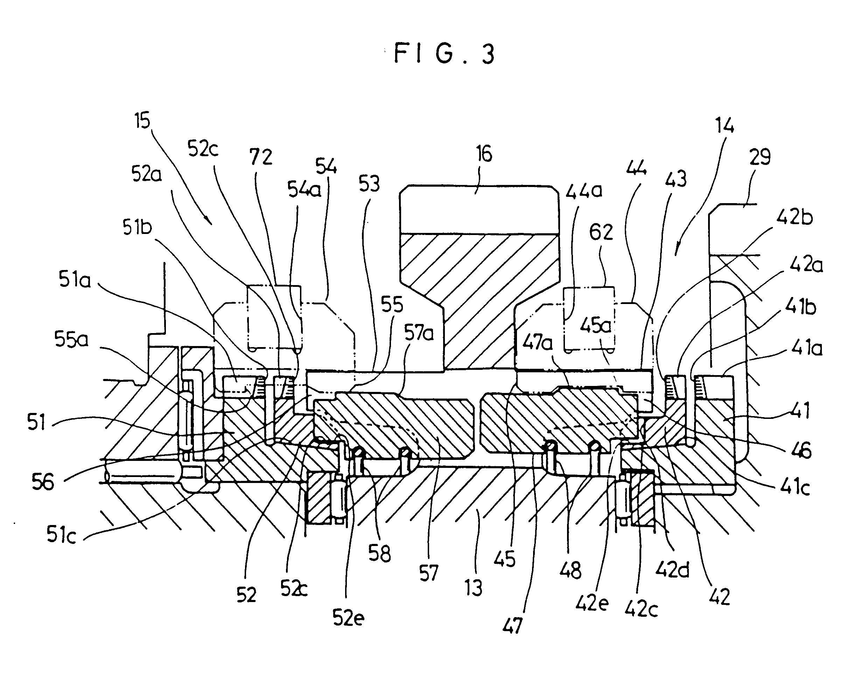

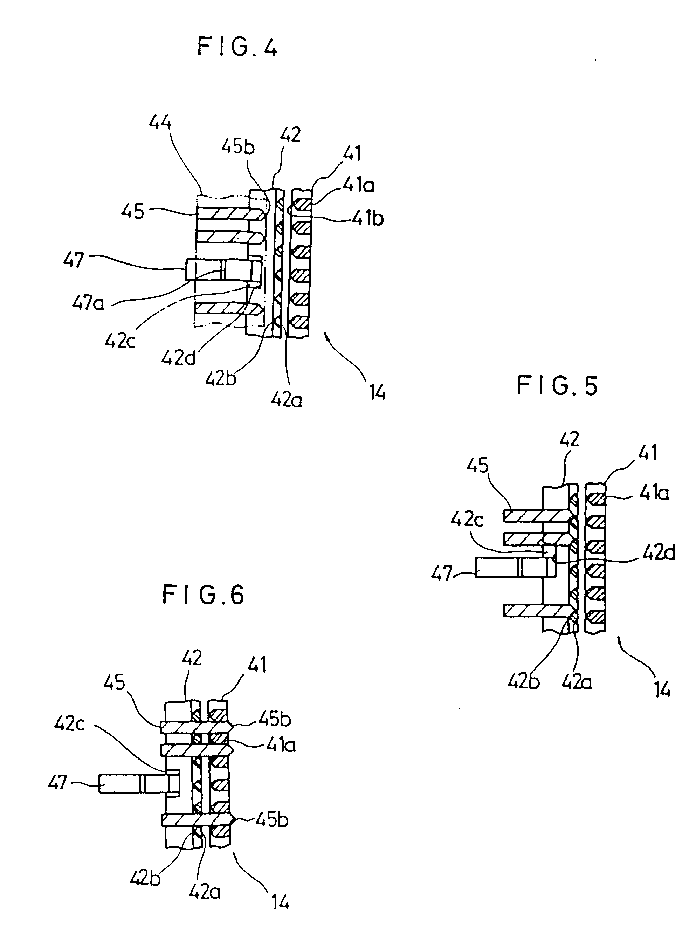

The operation of this synchromesh type intermittent power on-off making mechanism 14 is explained as follows:
In the opened position shown in FIGS. 2 and 3, the recess 45a of spline 45 provided on sleeve 49 and the protrusion 47c of the synchronizer key 47 are engaged with each other and the distal end of said synchronizer key 47 is loosely inserted in the cavity 42c of the synchronizer ring 42. A switching operation may be made from this state by continuously urging the sleeve 44 rightwards (engaging direction), as seen in this drawing by means of the later described low speed side switching mechanism 651. Thus as the sleeve 44 is moved toward the synchronizer ring 42 by means of the urging force of the aforementioned switching mechanism, first, the distal end of the synchronizer key 47 comes in contact with the end surface 42d of the cavity 42c of the synchronizer ring 42 (see FIG. 4), whereby this synchronizer ring 42 may be pressured onto the cone clutch surface 41c of the dog gear 41. As a result, the aforementioned synchronizer ring 42 tends to follow the dog gear 41 by dint of friction. Then as the aforementioned sleeve 44 is further moved rightward, as seen in this figure, from this state, the protrusion 47a of the aforementioned synchronizer key 42 is disengaged from the recess 45a provided on the inner periphery of this sleeve 44, then, the synchronizer key 47 is pressured inward by the inner periphery of the sleeve 44. Therefore, the aforementioned synchronizer key 47 is further pressured onto the cone clutch surface 41c of the dog gear 41; consequently, a powerful mutual frictional force is to be exerted between this synchronizer ring 42 and the dog gear 41. Accordingly, the aforementioned synchronizer ring 42 is urged to a position, being a position most relatively displaced from the center boss 13, that is, a position where an inside side surface of the cavity part 42c abuts on the side surface of the synchronizer key 47 (see FIG. 5). And at this position, the bevels forming the tip 42b of the teeth 42a of the aforementioned synchronizer ring 4 abut each other, thereby preventing the sleeve 44 from further forwarding rightward, as seen in the aforementioned figure. Under this state if the relative rotational speed between the aforementioned dog gear 41 and aforementioned center boss 13 diminishes, the frictional force exerted from the cone clutch surface 41c onto the aforementioned synchronizer ring 42 will decrease. On this account, at a stage where the frictional force has been nearly extinguished, with the revolution of the aforementioned dog gear 41 and that of the aforementioned center boss 13 nearly synchronized, it becomes possible for the aforementioned sleeve 44 to push back the synchronizer ring 42 by the guiding action of the bevels of the tips 42b and 45b to the direction reverse to that in which it was displaced by the frictional force and, as a consequence, the sleeve 44 will g ahead, so that its spline 45 will engage with the teeth 41a of the aforementioned dog gear 41 (see FIG. 6).

On the other hand the high speed side synchromesh type intermittent power on-off making mechanism 15 has dog gear 51 and synchronizer ring 52 arranged between the other end of the aforementioned center boss 13 and the boss 3a of the ring gear 23 which forms a transmission end of the aforementioned high speed side mechanical transmission system b. The dog gear 51 is securely held on the boss 23a of the aforementioned ring gear 23 and has on its periphery teeth 51a with their tips 51b turned toward the aforementioned center boss 13. On the outer periphery of the boss of this dog gear 51, there is formed a cone clutch surface 51c which is gradually tapering toward the center boss 13; on this cone clutch surface 51c, the aforementioned synchronizer ring 52 is slidably engaged on this cone clutch surface 51a. The synchronizer ring 52 has on its periphery teeth 52a with their tips 52b thereof turned toward the center boss 13 and at a plurality of parts of its end, cavities 52c are formed. On the other hand, on the outer periphery of the center boss 13, there is formed a spline 53 having the same effective diameter and pitch as those of the teeth 51a of the aforementioned dog clutch 51 and the teeth 52a of the synchronizer ring 52; with this spline 53, a spline 55 carved in the inside periphery of the sleeve 54 is slidably geared in the axial direction. At the positions corresponding to the aforementioned cavities 52c of this center boss 13, there are provided notched grooves 56 opening to the end and in each notched groove, each synchronizer key 57 is engaged. The width of the synchronizer key 57 is preset to be nearly equal to the opening width in the circumferential direction of the aforementioned notched groove 56. Accordingly, these synchronizer keys 57 are slidable only in the axial and radial directions of the center boss 13. Each synchronizer key 57 is urged outward by a spring 58 and its tip is inserted in the cavity 52c of the aforementioned synchronizer ring 52. There is provided a protrusion 57a on the outer surface of each synchronizer key 7 and this protrusion 57a is elastically engaged with a shallow recess 55a provided in the internal periphery of the spline 55 of the aforementioned sleeve 54. In the external periphery of the aforementioned sleeve 54, an annular groove 54a is formed and in this annular groove 54a, shifter 72 of a switching mechanism 71 described later is engaged.

Thus this high speed synchromesh type intermittent power on-off making mechanism 15 is urged by a later described high speed side switching mechanism, to effect intermittent power on-off making by exerting the similar action as the aforementioned low speed one.

Next, composition of the above described two switching mechanisms 61 and 71 is described:
First the low speed side switching mechanism 61 is equipped with shifter 72 with its distal end engaged with sleeve 44 of the low speed synchromesh type intermittent power on-off making mechanism 14, slide shaft 63 which is forward - backable in a direction parallel to the axial center of the aforementioned sleeve 44, while holding the root end of this shifter 72, a spring 64 for urging this slide shaft 63 leftward (removing direction), as seen in this figure, and hydraulic actuator 65 for urging the aforementioned slide shaft 63 rightward (engaging direction), as seen in this figure. The hydraulic actuator 65 has cylinder bore 66 having a larger diameter than that of said slide shaft 63 formed in casing wall 49 holding the aforementioned slide shaft 63 and in the internal periphery of the cylinder bore 66, a piston 66 formed integrally with the aforementioned slide shaft 63 is slidably engaged, said actuator being of a design such that a pressure chamber 68 formed inside the cylinder bore 66 may be selectively connected to a tank 91 or constant oil pressure source 92 through a solenoid valve 69.

The high speed side switching mechanism 71 is equipped with shifter 62 with its distal end engaged with sleeve 54 of high speed side synchromesh type intermittent on-off making mechanism 15, slide shaft 73 which is forward backable in a direction parallel with the axial center of the aforementioned sleeve 54, while holding the root end part of this shifter, a spring 74 for urging the slide shaft 73 rightward (removing direction), as seen in this figure and hydraulic actuator 75 for urging the aforementioned slide shaft 73 leftward (engaging direction), as seen in this figure. The hydraulic actuator 75 is of a design such that in the casing wall 45 which is holding the aforementioned slide shaft 73, a cylinder bore 76 having a larger diameter than that of said slide shaft 73 is formed, in the internal periphery of this cylinder bore 76, piston 77, formed integrally with the aforementioned slide shaft 73 is slidably engaged therewith and a pressure chamber 78 formed inside the cylinder bore 73 may be selectively connected to tank 91 or constant pressure hydraulic source 9 through a solenoid valve 9.

Numerals 81 and 82 denote magnets installed at an end part of each of the aforementioned slide shafts 63 and 73; 83 and 85, lead switches for disengaging position detection which make the switching upon sensing approaching magnets 81 and 82; and 84 and 86, similarly lead switches for engaging position detection which make switching upon sensing approaching magnets.

Numeral 87 in the figure designates a rotational speed detector for detecting a rotational speed of the transmission aid of loss speed side mechanical type transmission system a; and 88, another rotational speed detector for detecting the rotational speed of the transmission end of the high speed side mechanical transmission system.

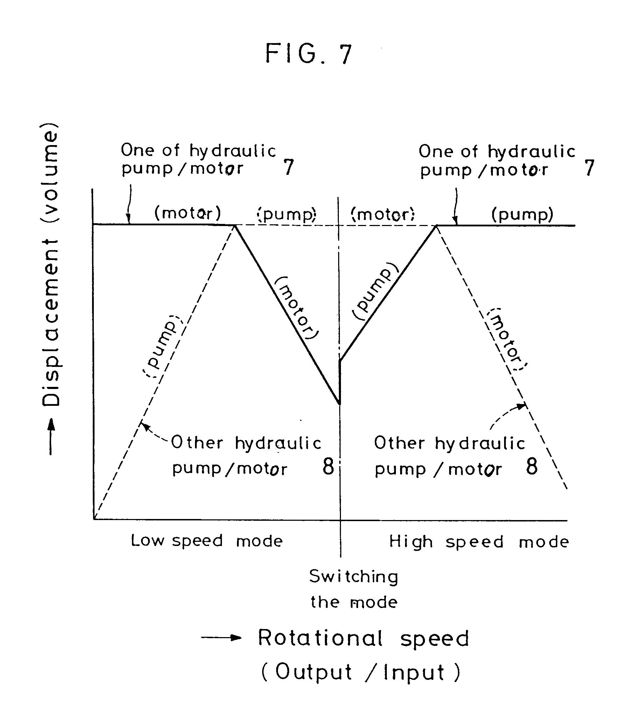

In the following, the operation of whole of thus nonstep speed change gear will be described:
In the low speed mode in which the low speed synchromesh type intermittent power on-off making mechanism 14 is brought into its connected state, while holding the sleeve 44 in its engaged position, but the high speed synchromesh type power transmission mechanism 15 is in its opened state, while holding the sleeve 54 in its disengaged position, the input side and the output side are directly connected through the low speed side mechanical transmission system a which passes between the first and the second in- and out-put ender 1 and 2 of the aforementioned differential gear mechanism 4, whereby part of the inputted power is directly transmitted to the output shaft 18 through this mechanical transmission system a. At this time, as shown in Fig. 7, one of the aforementioned hydraulic pumps/motors 7 functions as a motor, while the other hydraulic pump/motor 8 above-mentioned works as a pump. Thus the torque at a third in- and out-put and 3 of the aforementioned differential gear mechanism 4 is transmitted to the aforementioned output shaft 18 through a hydraulic type transmission system A formed between the aforementioned two pumps/motors 7 and 8.

And in this low speed mode, the pump capacity of the other hydraulic pump/motor 8 above-mentioned goes on being increased and after its capacity has reached a maximum the motor capacity of the other hydraulic pump/motor 7 above-mentioned is gradually reduced, causing the rotational speed of the aforementioned output shaft 18 to increase relative to the revolution of the aforementioned input shaft 25. In other words, if the capacity of the other hydraulic pump/motor above-mentioned is zero, the third in- and out-put end 3 of the differential gear mechanism 4 will be nearly in no load running state; therefore, the output shaft 18 joined to the second in- and out-put end 2 of said differential gear mechanism 4 is nearly in standstill. And with increasing capacity of the aforementioned hydraulic pump/motor 8, the rotational speed of the aforementioned third in- and out-put end 3 will relatively diminish, while the rotational speed of the second in- and out-put end 2 will relatively augment.

And at the time when the speed of the dog gear 41 connected to the transmission end of the aforementioned low speed side mechanical transmission system and that of the god gear 51 connected to the transmission end of the high speed side mechanical transmission system b become nearly equal, a switching operation as described later is executed, whereby switching to the high speed mode is made.

In this high speed mode, there is formed a mechanical transmission system b which passes between the first and the third in- and out-put ends 1 and 3 of the aforementioned differential gear mechanism 4, whereby part of the inputted power is directly transmitted to the output shaft 18 through this mechanical transmission system b. At this time, as shown in Fig. 7, one of the hydraulic pumps/motors 7 functions as a pump, while the other hydraulic pump/motor 8 above-mentioned works as a motor. Thus the torque of the second in- and out-put end 2 of the aforementioned differential gear mechanism is transmitted to the aforementioned output shaft 18 through a hydraulic transmission system B formed between one of the hydraulic pumps/motors above-mentioned 7 and the other hydraullic pump/motor 8. And in the high speed mode, the rotational speed of the aforementioned out-put shaft 18 relative to the rotational speed of the aforementioned input shaft 25 will go on being increased by gradually increasing the pump capacity of one of the hydraulic pumps/motors above-mentioned and, then gradually decreasing the motor capacity of the other hydraulic pump/motor 8, after the aforementioned pump capacity has reached its maximum.

Hereafter, the operation run when making a switching from the low speed mode to the high speed mode is explained. When not only the slide shaft 63 is held in its engaged position, while setting the solenoid valve 69 in its excited position I, but the slide shaft 73 is held in its disengaged position, while the solenoid valve 79 is set in its unexcited position II, the low speed side synchromesh type intermittent power on-off making mechanism 14 is in its connected state, while the high speed side synchromesh type intermittent power on-off making mechanism 15 is in its opened state. In such a low speed mode, when rotational speed detectors 87 and 88 have detected that the rotational speed R₁ of the low speed side dog gear 41 has approached the rotational speed R₂ of the high speed side dog gear 51 and that the difference between them has become smaller than the preset valve R₀, the solenoid valve 79 will be switched to its excited position L, to introduce compressed liquid into pressure chamber 78 of hydraulic actuator 5, for the system to be in its stand-by posture, while keeping the sleeve 54 depressed in its engaging direction (leftward, as seen in the drawing). In this way, the previously described synchronous action is performed; thus, at the time when the aforementioned high speed side dog gear 51 is synchronized with the center boss 13 which makes turn integrally with the low speed side dog gear 41, the spline 55 of the high speed side sleeve 54 meshes with the teeth 51 of the high speed side dog gear 51. Thus the high speed side synchromesh type intermittent power on-off making mechanism 15 will become its connected state. This state may be detected by the closing of the lead switch 86. Then that both of the aforementioned two intermittent power on-off making mechanisms 15 are engaged is confirmed by lead switches 84 and 86; thereafter, the hydraulic force is deenergized by switching the solenoid valve 69 to its unexcited position II and the sleeve 44 is pressed in the disengaging direction (leftward, as seen in the drawing) by the urging force of the spring 64, for the system to be in its stand-by posture. In this state, the displacement of the hydraulic pump/motor) is corrected in its increasing direction. As a result, the transmission torque between the sleeve 44 and the dog gear 41 diminishes and the moment when the value has become zero, the urging force of the spring will overcome the engaging force between the sleeve 44 and the dog gear 41. On this account, the sleeve 44 will move in its disengaging direction (left-ward, as seen in the drawing), causing the low speed side synchromesh type intermittent power on-off making mechanism 14 to be in its opened state. Then, as shown in Fig. 3, only the high speed side synchromesh type intermittent power on-off making mechanism 15 will turn into its connected. State, thus for the system to be in its high speed mode. And this may be sensed by a closing operation of thd lead switch 83.

For making transition from the high to the low mode, it is proper to follow the process above mentioned in reverse order. Thus first, with the solenoid valve 69 switched to its excited position 2, the sleeve 44 is pressed to its engaging direction (right-ward, as seen in this figure), for the system to be in its stand-by posture. Then the moment when the speed of the sleeve 44 and that of the dog gear 41 are in agreement, the sleeve 44 moves to its engaging position, causing the low speed side synchromesh type power on-off making mechanism 14 to be in its connected state.

In accompaniment therewith, the lead switch 84 is closed. Then that the intermittent power on-off making mechanisms 14 and 15 are both in their connected state is confirmed by lead switches 84 and 86, after which the solenoid valve 79 is switched to its unexcited position, for the system to be in its stand-by posture. The the volume of the hydraulic pump/motor 7 is to be corrected to its reducing direction.

As a result, the torque between sleeve 54 and dog gear 51 diminishes and the moment when its value becomes nearly zero, the sleeve 54 moves in its disengaging direction (right-ward, as seen in the drawing), causing the high speed side synchromesh type intermittent power on-off making mechanism 15 to be in its opened state. And this may be detected by the closing operation of the lead switch 85.

The switching between it low and the high speed modes may be made in this way, but this device employs synchromesh type intermittent power on-off making mechanism 14 and 15 which use for smaller number of parts at this switching section for simplified structure than the multiple disc clutches. On this account, reduction in size and weight of the device as a whole is attainable.

Besides, the synchromesh type intermittent power on-off making mechanism 14 and 15 permit easy maintenance, involving less abrasion of parts than multiple disc clutches.

And this device obviates the need of such a delicate operation as connecting a large number of clutch discs to each other, while sliding then. Accordingly not only proper switching may be ensured by means of a simple switching mechanisms 61 and 71 adapted to continuous pressing of the sleeve in the required direction, but energy loss at the switching time may be effectively inhibited.

Moreover, the combination of synchromesh type intermittent power on-off making mechanisms 14 and 15 and the above-described switching mechanisms 61 and 71 will enable the mode switching to be positively done merely by getting the aforementioned switching mechanisms 61 and 71 operate, upon detecting that the rotational speed of the transmission ends 23 a and 29 a of the center boss 13 and the respective transmission system have approached to each other, thereby continuously urging the sleeves 44 and 54 in the required direction. For this reason, unlike simple dog clutches, it is not subject to such a limitation that the switching operation must be made simultaneously as the rotational speed of the center boss and that of the transmission end of each transmission system are brought into exact agreement by controlling at high accuracy the capacity of the hydraulic pump/motor. It is, therefore, possible to make desired switching without a hitch, using lows priced rotational speed detectors with relatively low precision.

The composition of the synchromesh type intermittent power on-off making mechanism is not limited to the aforementioned, but various modifications are possible as by using constant load type, etc., without departing from the scope of this invention.

And the differential gear mechanism is not restricted to the aforementioned planetary gear type.

Further, the nonstep speed change mechanism is not confined, as the case may be, to the HST system as described in the aforementioned embodiment, but for example, traction drive system or belt type, etc., are also permissible.

Whereas in the aforementioned embodiment, an input distributed system with the differential gear mechanism arranged on the input side is described, this invention is similarly applicable to output distributed system.

## Claims

1. A non-step speed change gear comprising
a) a differential gear mechanism (4) having a first, second and third input/output end (1, 2, 3) and forming a low speed side mechanical transmission system (a) which passes between first and second input/output ends (1, 2) and a high speed side mechanical transmission system (b) which passes between first and third input/output ends (1, 3),
b) a non-step speed change mechanism (12) which while connecting one of its input/output ends(7a) to the second input/output end (2) of said differential gear mechanism (4), connects its other input/output end (8a) to said third input/output end (3),
c) a low speed side intermittent power on-off making mechanism (14) for contacting or removing the transmission end (boss part 29a) of said low speed side mechanical transmission system (a) on or from a common rotary element (13) provided on the input/output side of the speed change gear,
d) a high speed side intermittent power on-off making mechanism (15) for contacting or removing the transmission end (boss part 23a) of the high speed side mechanical transmission system (b) on or from said common rotary element,
e) and a switching mechanism (61, 71) for switching between the states of engagement and disengagement of each of said intermittent power on-off making mechanisms (14, 15), respectively,
characterized in that
f) said low speed side intermittent power on-off making mechanism (14) and said high speed side intermittent power on-off making mechanism (15) are both of a synchromesh type comprising an engageable and disengageable low speed sleeve (44) and high speed sleeve (54), respectively,
g) said engagement and disengagement of said sleeves (44, 54) are based on the continuous control of said non-step speed change mechanism (12),
h) the engagement mode being such that said respective sleeve (44 or 54) is continuously pressed in its engaging direction by said switching mechanism (61 or 71) until it is brought in a full engagement position, while controlling said non-step speed change mechanism (12) to decrease the rotary speed difference between said respective transmission end (boss part 29a or 23a) and said common rotary element (13),
i) the disengagement mode being such that said respective sleeve (44 or 34) is pressed by a suitably weak force in the disengaging direction by said switching mechanism (61 or 71) until it is brought into a full disengagement position, while said non-step speed change mechanism (12) is controlled so as to decrease the transmission torque of the respective intermittent power on-off making mechanism (14 or 15),
j) and that the engagement of one of said two sleeves (44, 54) is effected before the disengagement of the other of said two sleeves (44, 54) is effected.

2. A non-step speed change gear according to claim 1,
**characterized in that** said non-step speed change mechanism (12) is provided by a hydraulic transmission mechanism.

3. A non-step speed change gear according to claim 1,
**characterized in that** said non-step speed change mechanism (12) is provided by a traction drive mechanism.

4. A non-step speed change gear according to claim 1,
**characterized in that** said non-step speed change mechanism (12) is provided by a belt drive mechanism.

## Patentansprüche

1. Stufenloses Geschwindigkeitswechselgetriebe mit
a) einem Differentialgetriebemechanismus (4), der ein erstes, zweites und drittes Eingangs-/Ausgangsende (1, 2, 3) aufweist und ein mechanisches Übertragungssystem für die Niedriggeschwindigkeitsseite (a), das zwischen das erste und zweite Eingangs-/Ausgangsende (1, 2) geschaltet ist, und ein mechanisches Übertragungssystem für die Hochgeschwindigkeitsseite (b), das zwischen das erste und dritte Eingangs-/Ausgangsende geschaltet ist, bildet (1, 3),
b) einem stufenlosen Geschwindigkeitswechselmechanismus (12), dessen eines Eingangs-/Ausgangsende (7a) mit dem zweiten Eingangs-/Ausgangsende (2) des genannten Differentialgetriebemechanismus (4) verbunden ist, und dessen anderes Eingangs-/Ausgangsende (8a) mit dem dritten Eingangs-/Ausgangsende (3) verbunden ist,
c) einem intermittierenden Ein-Aus-Schaltmechanismus (14) für die Niedriggeschwindigkeitsseite zum Verbinden oder Entfernen des Übertragungsendes (Augenteil 29a) des genannten mechanischen Übertragungssystems der Niedriggeschwindigkeitsseite (a) mit oder von einem gemeinsamen Rotationselement (13), das auf der Eingangs-/Ausgangsseite des Geschwindigkeitswechselgetriebes vorgesehen ist;
d) einem intermittierenden Energie-Ein-Aus-Schaltmechanismus (15) für die Hochgeschwindigkeitsseite zum Verbinden oder Entfernen des Übertragungsendes (Augenteil 23a) des genannten mechanischen Übertragungssystems der Hochgeschwindigkeitsseite (b) mit oder von dem gemeinsamen Rotationselement,
e) und einem Schaltmechanismus (61, 71), um jeweils zwischen einem eingekuppelten und einem ausgekuppelten Zustand jedes intermittierenden Energie-Ein-Aus-Schaltmechanismen (14, 15) zu schalten,
dadurch gekennzeichnet, daß
f) der intermittierende Energie-Ein-Aus-Schaltmechanismus (14) der Niedriggeschwindigkeitsseite und der intermittierende Energie-Ein-Aus-Schaltmechanismus (15) der Hochgeschwindigkeitsseite beide von der Synchronart sind und eine einrückbare und ausrückbare Niedergeschwindigkeitsmuffe (44) bzw. Hochgeschwindigkeitsmuffe (54) umfassen,
g) das Einrücken und Ausrücken der genannten Muffen (44, 55) auf der kontinuierlichen Steuerung des genannten stufenlosen Geschwindigkeitswechselmechanismus basieren,
h) der Einrückmodus dadurch zustande kommt, daß die jeweilige Muffe (44 oder 54) von dem Schaltmechanismus (61 oder 71) fortwährend in seine Einrückrichtung gedrückt wird, bis sie in die voll eingerückte Stellung gebracht ist, während der stufenlose Geschwindigkeitswechselmechanismus (12) gesteuert wird, um die Rotationsgeschwindigkeitsdifferenz zwischen dem jeweiligen Übertragungsende (Augenteil 29a oder 23a) und dem gemeinsamen Rotationselement (13) zu verkleinern,
i) der Ausrückmodus dadurch zustande kommt, daß die jeweilige Muffe (44 oder 34) von dem Schaltmechanismus (61 oder 71) mit einer angemessen kleinen Kraft in die Ausrückrichtung gedrückt wird, bis sie in die voll ausgerückte Stellung gebracht ist, während der stufenlose Geschwindigkeitswechselmechanismus (12) so gesteuert wird, daß das Übertragungsdrehmoment des jeweiligen intermittierenden Energie-Ein-Aus-Schaltmechanismus (14 oder 15) verkleinert wird,
j) und das Einrücken einer der zwei Muffen (44, 54) vollzogen wird, bevor das Ausrücken der anderen der zwei Muffen (44, 54) vollzogen wird.

2. Stufenloses Geschwindigkeitswechselgetriebe nach Anspruch 1,
dadurch gekennzeichnet, daß das stufenlose Geschwindigkeitswechselgetriebe (12) mit einem hydaulischen Übertragungsmechanismus versehen ist.

3. Stufenloses Geschwindigkeitswechselgetriebe nach Anspruch 1,
dadurch gekennzeichnet, daß das stufenlose Geschwindigkeitswechselgetriebe (12) mit einem Traktionsantriebsmechanismus versehen ist.

4. Stufenloses Geschwindigkeitswechselgetriebe nach Anspruch 1,
dadurch gekennzeichnet, daß das stufenlose Geschwindigkeitswechselgetriebe mit einem Riemenantriebsmechanismus versehen ist.

## Revendications

1. Une transmission continue de vitesse comprenant:
a) un mécanisme d'engrenage différentiel (4) possédant un premier, un deuxième et un troisième embouts d'entrée et de sortie (1, 2, 3) et formant un système de transmission mécanique du côté petite vitesse (a) qui passe entre les premier et deuxième embouts d'entrée et de sortie (1, 2) et un système de transmission mécanique du côté grande vitesse (b) qui passe entre les premier et troisième embouts d'entrée et de sortie (1, 3),
b) un mécanisme de changement de vitesse continu (12) qui tout en ayant un de ses embouts d'entrée et de sortie (7a) relié au deuxième embout d'entrée et de sortie (2) dudit mécanisme d'engrenage différentiel (4) a son autre embout d'entrée et de sortie (8a) relié audit troisième embout d'entrée et de sortie (3),
c) un mécanisme (14) d'embrayage et de débrayage intermittent du côté basse vitesse pour mettre en contact ou retirer l'embout de la transmission (partie en saillie 29a) du système de transmission mécanique (a) du côté basse vitesse avec ou depuis un élément commun rotatif (13) formé sur le côté entrée/sortie de la transmission continue de vitesse.
d) un mécanisme (15) d'embragage et de débrayage intermittent du côté grande vitesse pour mettre en contact ou retirer l'embout de la transmission (partie en saillie 23a) du système de transmission mécanique (b) du côté grande vitesse avec ou depuis ledit élément rotatif commun,
e) et un commutateur (61, 71) pour la commutation entre les états d'engagement et de désengagement de chacun de ces mécanismes respectifs d'embrayage et de débrayage intermittent (14, 15), respectivement,
caractérisé en ce que
f) ledit mécanisme (14) d'embrayage et de débrayage intermittent du côté basse vitesse et ledit mécanisme (15) d'embrayage et de débrayage intermittent du côté des grandes vitesses sont tous les deux d'un type à synchronisation comprenant un manchon à basse vitesse (44) embrayable et débrayable et respectivement un manchon à grande vitesse (54),
g) l'embrayage et le débrayage de ces manchons (44, 54) sont basés sur la commande continue du mécanisme de transmission continue (12),
h) le mode d'embrayage étant tel que chaque manchon (44, 54) est respectivement pressé en continu dans le sens de son engagement par le dispositif de commutation (61 ou 71) jusqu'à ce qu'il soit amené dans une position de prise totale, tout en commandant le mécanisme de transmission continue de vitesse (12) pour faire baisser la différence de vitesse de rotation entre respectivement l'embout de transmission (partie en saillie 29a ou 23a) et l'élément rotatif commun (13),
i) le mode de débrayage étant tel que l'un des manchons (44 ou 54) est pressé par une légère force convenable dans le sens du débrayage par le mécanisme de commutation (61 ou 71) jusqu'à ce qu'il soit amené dans sa position de désengagement total tandis que le mécanisme de transmission continue de vitesse (72) est commandé de façon à faire baisser le couple de transmission du mécanisme (14 ou 15) d'embrayage et de débrayage intermittent,
j) et en ce que l'egagement de l'un des deux manchons (44, 54) est effectué avant que ne soit effectué le désengagement de l'autre manchon.

2. Transmission continue de vitesse selon la revendication 1, caractérisée en ce que ce mécanisme de transmission continue de vitesse (12) est fourni par un mécanisme de transmission hydraulique.

3. Transmission continue de vitesse selon la revendication 1, caractérisée en ce que ce mécanisme de transmission continue de vitesse (12) est fourni par un mécanisme d'entraînement par traction.

4. Transmission continue de vitesse selon la revendication 1, caractérisée en ce que ce mécanisme de transmission continue de vitesse (12) est fourni par un mécanisme d'entraînement par courroie.
